# EUROPEAN PATENT APPLICATION

(11) **EP 2 395 393 A1**
(43) Date of publication of application: **14.12.2011**
(21) Application number: 10738670.8
(22) Date of filing: 04.02.2010
(51) Int. Cl.: G03B 15/05, G03B 15/03, H04M 1/00, H04N 5/238

(54) **PORTABLE TERMINAL WITH CAMERA FUNCTION, FLASHLIGHT CONTROL METHOD AND FLASHLIGHT CONTROL PROGRAM**

(30) Priority: 09.02.2009 JP 2009027284
(71) Applicant: NEC Corporation, Tokyo 108-8001 (JP)
(72) Inventor: OOZEKI, Keisuke, Tokyo 108-8001 (JP)
(74) Representative: Glawe, Delfs, Moll
(86) International application number: PCT/JP2010/052009
(87) International publication number: WO 2010/090342

(57) **Abstract**

Provided is a portable terminal which can ensure required brightness appropriately according to the capturing conditions such as the capture mode, capture settings, or the like, and also provided are a flashlight control method and a flashlight control program.

The portable terminal is a portable terminal with a camera function and includes a camera, a flashlight, a memory in which current values for the flashlight corresponding to each of capturing conditions of the camera are registered, and a control section which searches for a current value corresponding to the capturing conditions which are set in the camera from a memory and lights the flashlight with the current value thus searched.

## Description

### TECHNICAL FIELD

The present invention relates to a portable terminal with camera function, a flashlight control method, and a flashlight control program.

### BACKGROUND ART

Portable terminals with camera function in which flashlight emits light when taking a picture are becoming popular. For example, the Japanese Patent Application Laid-Open No. 2003-289367 (patent document 1) disclosed a mobile phone with camera function which lights LEDs (Light Emitting Diode) as the flashlight.

In addition, the Japanese Patent Application Laid-Open No. 2005-215322 (patent document 2) disclosed an electronic apparatus which takes a picture by letting LEDs emit light based on investigated most suitable luminosity, after investigating the most suitable luminosity by temporary letting the LEDs emit light.

### DISCLOSURE OF THE INTENTION

### Technical Problem

The mobile phone with camera function described in the patent document 1 may not be able to ensure enough brightness at some capturing conditions such as some capture modes and capture settings or the like. When LEDs are turned on for a long time with a large current value in order to secure enough brightness, the LEDs may be damaged.

In addition, for an electronic apparatus described in the patent document 2, because it is necessary to investigate the most suitable luminosity by letting LEDs emit light temporarily, it may cause difficulties to capture an instant at a sports mode or the like.

The object of the present invention is to settle the above-mentioned problems and provide a portable terminal, a flashlight control method, and a flashlight control program which can ensure required brightness accurately corresponding to capturing conditions including capture modes and capture settings or the like.

### Solution to Problem

In order to achieve the above-mentioned objects, the portable terminal with camera function includes a camera, a flashlight, a memory in which current values for the flashlight corresponding to each of capturing conditions of the camera are registered, and a control section which searches from the memory the current value corresponding to the capturing condition which is set in the camera and lets the flashlight emit light based on the searched current value.

In addition, a flashlight control method according to the present invention by using a portable terminal with camera function including a camera, a flashlight and a memory includes registering a current value for the flashlight corresponding to each of capturing conditions of the camera into the memory, searching from the memory a current value which is set to the camera corresponding to the capturing condition, and letting the flashlight emit light with the searched current value.

Further, a control program according to the present invention for executing by a computer in a portable terminal including a camera, a flashlight and a memory in which current values for the flashlight corresponding to each of capturing conditions of the camera are registered includes a procedure which searches from the memory a current value which is set to the camera corresponding to the capturing condition, and a procedure which lets the flashlight emit light with the searched current value.

### Effects of the invention

According to the present invention, because the portable terminal can change a current value corresponding to the capturing conditions including capture modes, capture settings and so on when letting the flashlight emit light, it can capture an object with the required accurate brightness secured.

### BRIEF DESCRIPTION OF THE DRAWINGS

Fig.1 is a block diagram showing related sections of the camera function of the mobile phone which is one of an example of the portable terminal according to the present invention.
Fig. 2 is a table showing an example of relations between capture modes and maximum exposure times of the mobile phone according to an embodiment.
Fig. 3 is a table showing an example of relations between current values and maximum lighting possible times when letting the flashlight emit light in the mobile phone according to the embodiment.
Fig. 4 is a table showing an example of relations between the capture modes and the current values of the flashlight of the mobile phone according to the embodiment, and relations between the maximum exposure times and the maximum lighting possible times on the set mode.
Fig. 5 is a flowchart showing an example of a capturing operation of the mobile phone which is an example of the portable terminal according to the present invention.

### BEST MODE FOR CARRYING OUT THE INVENTION

Hereinafter, preferred embodiments for carrying out the present invention of a portable terminal, a flashlight control method, and a flashlight control program will be described. Further, in the following descriptions, although they describe the portable terminal and the flashlight control method according to the present invention, it may execute the flashlight control method by a flashlight control program which can be executed by a computer, or it may record the flashlight control program in a computer-readable recording medium.

Moreover, in the following descriptions, although a mobile phone is described as an example of the portable terminal according to the present invention, it is not limited to this, and it may includes any portable terminals having camera function with the flashlight such as PHS (Personal Handy-Phone System) terminals, PDAs (Personal Digital Assistants), portable audio players and laptop PCs (Personal Computer) or the like.

### (Features of the present invention)

The portable terminal with camera function according to the present invention includes the camera, the flashlight and the memory. A plural of the current values corresponding to the capturing conditions including capture modes, capture settings and so on when letting the flashlight emit light is registered in the memory.

By changing the capturing condition, the portable terminal with camera function according to the present invention changes a diaphragm value, the maximum exposure time and so on. Then, by referring the memory, an appropriate current value corresponding to a preset capturing condition is set to the flashlight, and a brightness required for the capture is ensured.

For example, when a sports mode, which requires a short exposure time, is set as the capturing condition at the portable terminal with camera function, the lighting time of the flashlight becomes short in accordance with the exposure time of the mode. Meanwhile, by referring the memory, the current value when letting the flashlight emit light becomes large. Accordingly, even if the lighting time of the flashlight is short, the enough brightness is ensured.

On the other hand, when the diaphragm value of the lens is set to large value in order to focus a whole screen for the portable terminal with camera function, the exposure time becomes long. Whereas, by referring the memory, the current value when letting the flashlight emit light becomes small. Accordingly, since the flashlight can emit light up to the maximum exposure time with a low possibility of damaging the flashlight, the enough brightness required to exposure can be ensured accurately.

### (Exemplary configurations of the embodiment)

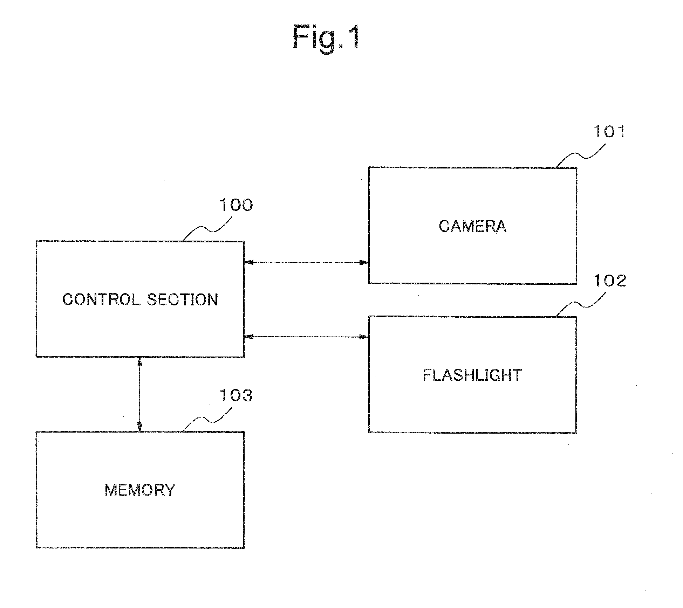

Then, as an example of the portable terminal according to the present invention, a schematic configuration for an example of a mobile phone with camera function will be described. Fig. 1 shows the example of the block diagram of the camera function of the mobile phone according to the embodiment. In Fig. 1, the mobile phone with camera function includes a control section 100, a camera 101, a flashlight 102 and a memory 103.

The camera 101 captures object and transmits captured data to the control section 100.

In order to acquire high-resolution captured data even in a dark capture environment, the flashlight 102 lights at the time of the capture by the camera 101. The flashlight 102 according to the embodiment lights during a predetermined time (i.e. exposure time) with a predetermined current value by the control of the control section 100.

In the memory 103, a plural of current values when emitting light from the flashlight, which is corresponding to each of various capturing conditions, is registered. In the memory 103 according to the embodiment, a table of the capture modes and the maximum exposure times, a table of the current values at the moment of emitting light from the flashlight and the maximum lighting possible times, and a table of the capture modes and the current values at the moment of emitting light from the flashlight are registered. Descriptions on respective table will be made later.

The control section 100 controls the camera 101 and the flashlight 102. The control section 100 determines an exposure time which is required for the capture based on information on the capture environment acquired by the camera 101. Here, the control section 100 determines a time range, which is smaller than a maximum exposure time being set to each of capture modes, as the exposure time. In addition, by referring the memory 103, the control section 100 determines a current value, which is used when the flashlight 102 emits light, corresponding to a set capturing condition. Then, the control section 100 lets the flashlight 102 emit light during the exposure time with the determined current value, and acquires the captured data by letting the camera 101 capture the objects.

Next, the tables registered in the memory 103 of the mobile phone with camera function according to the embodiment will be described. As for the capturing condition, three capture modes can be set to the mobile phone with camera function according to the embodiment, that is, "portrait mode" which captures persons who are standing still, "sports mode" which captures moving persons, and "night scene mode" which captures a night view.

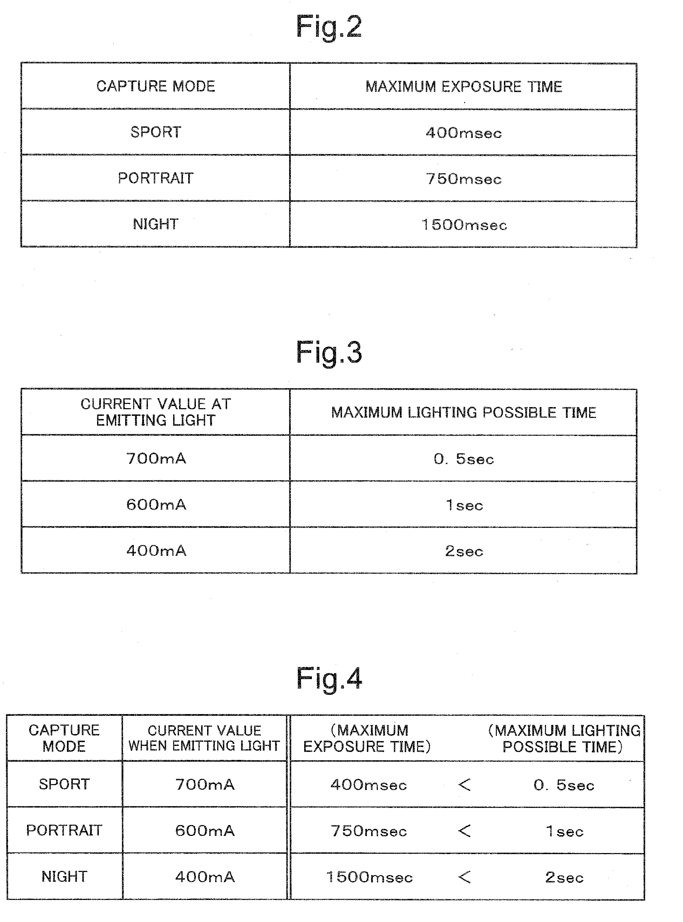

Fig. 2 shows the example of the table of capture modes and the maximum exposure times registered in the memory 103. In Fig. 2, the maximum exposure time of "the sports mode" is set to 400msec which is shorter than that of the portrait mode, in order to reduce blur of objects. In addition, the maximum exposure time of "night scene mode" is set to 1,500msec which is larger than that of the portrait mode, in order to ensure intensity of illumination of the capture image. Then, when "the portrait mode" is set to the mobile phone with camera function according to the embodiment, the control section 100 determines the exposure time of up to 750msec based on information of capture environments acquired from the camera 101 and the table shown in Fig. 2.

Fig. 3 shows the example of the table, which is registered in memory 103, showing relations between current values and maximum lighting possible times at the moment of emitting light from the flashlight 102. Maximum lighting possible time of the flashlight 102 changes according to the current values because of the device specifications. In case of the flashlight 102 according to the embodiment, when the current value at the moment of lighting is set at 700mA, it is possible to emit light during maximum 0.5 second. In addition, when the current value at the moment of lighting is set at 600mA, it is possible to emit light at maximum 1 second, and when it is set at 400mA, it is possible to emit light at maximum 2 seconds. If the flashlight 102 emits light beyond the maximum lighting possible time on each of current values, a possibility of damaging the flashlight 102 will be increased.

Here, although it is possible to ensure a higher brightness when 700mA is set as the current value at the moment of lighting than when 600mA is set, the lighting time becomes short due to large current value. On the other hand, although it is possible to ensure a longer lighting time when 400mA is set as the current value at the moment of lighting than when 600mA is set, the brightness becomes low due to small current value.

Further, the table shown in Fig. 3 should be rewritten when replacing the flashlight 102, but it can skip rewriting of the table which is shown in Fig. 3 when the flashlight 102 of the same specifications is always replaced.

Fig. 4 shows the table, which is registered in the memory 103, showing the example of the current values, which are set at each of capture modes, at the moment of emitting light from the flashlight 102. By referring the table shown in Fig. 4, the control section 100 determines the current value at 700mA in case of "sports mode", 600mA in case of "portrait mode", and 400mA in case of "night scene mode". As a reference, the maximum exposure times on the set mode and the maximum lighting possible times for the determined current value are added to Fig. 4. The maximum exposure time on the set mode is shorter than the maximum lighting possible time which is specified by the current value of the flashlight 102 on the set mode. Accordingly, even when it activates at maximum exposure times on the set mode, a possibility of damaging the flashlight 102 will be decreased.

### (Descriptions of operation of the embodiment)

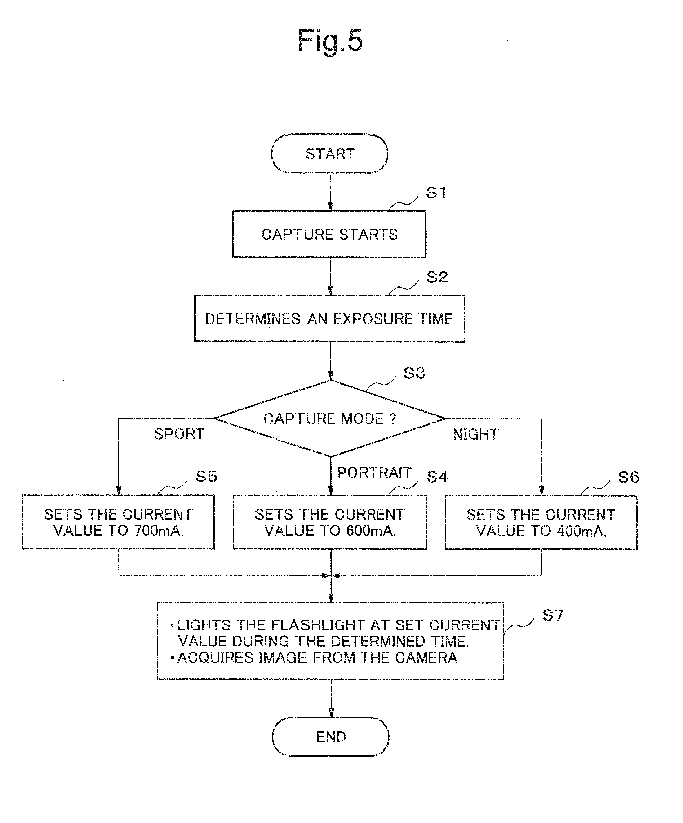

Next, the example of the capture operation of the mobile phone of the embodiment will be described with Fig. 5. Although the following description states a case that three capture modes can be set as the capturing conditions, that is, "portrait mode", "sports mode" and "night scene mode", it can apply similarly for case of setting various capture settings including the capture modes, the diaphragm values, and shake corrections or the like.

In Fig. 5, when the camera 101 of the mobile phone with camera function initiates the capture (Step S1), the control section 100 determines the requested exposure time based on information on capture environments acquired by the camera 101 (Step S2). Further, it recognizes the capture mode among "portrait mode", "sports mode", or "night scene mode" (Step S3).

When the capture mode is "portrait mode" (portrait in Step S3), the current value is set to 600mA based on the table registered in the memory 103 as shown in Fig. 4 (Step S4). In addition, in Step S3, when the capture mode is "sports mode" (sport in Step S3), the current value is set to 700mA (Step S5), and when it is "night scene mode" (night in Step S3), it is set to 400mA (Step S6) respectively.

Further, the control section 100 lets the flashlight 102 emit light with the current value set in Steps S4-S6 respectively during exposure time determined in Step S2 as well as acquires the captured data from the camera 101 (Step S7).

### (Description of effect of the embodiment)

As it has described above, in the embodiment, the portable terminal changes the current value which is used when the flashlight 102 emits light corresponding to the capture mode by referring the memory 103 in which the tables on the capture modes and the current values at the moment of lighting are registered in advance, so the capture under ensuring the accurate required brightness can be executed. That is, the brightness required to capture can be accurately ensured without increasing a possibility of damaging the flashlight 102, because it lights for a short time with a high brightness or it lights for a long time with a low brightness.

While having described the invention of the present application referring to the embodiments, the invention of the present application is not limited to the above mentioned embodiments. It is to be understood that to the configurations and details of the invention of the present application, various changes can be made within the scope of the invention of the present application by those skilled in the arts.

This application claims priority from Japanese Patent Application No. 2009-027284, filed on February 9th, 2009, the contents of which are incorporation herein by the reference in their entirety.

### AVAILABILITY IN THE INDUSTRY

The portable terminal according to the present invention can apply to the portable terminal with camera function having the flashlight including cellular phones, PHSs, portable audio players, and laptop computers or the like.

### Description of the code

- 100: control section
- 101: camera
- 102: flashlight
- 103: memory

## Claims

1. A portable terminal with camera function comprising:
a camera;
a flashlight;
a memory in which current values for the flashlight corresponding to each of capturing conditions of the camera are registered; and
a control section which searches from said memory the current value corresponding to the capturing condition which is set in said camera and lets said flashlight emit light with the searched current value.

2. The portable terminal with camera function according to claim 1,
wherein a maximum exposure time for each said capturing condition is registered in said memory, and
wherein said control section searches from said memory the maximum exposure time corresponding to the capturing condition which is set in said camera, determines time not exceeding the searched maximum exposure time as the exposure time, and lets said flashlight emit light during the determined time.

3. The portable terminal with camera function according to claim 2,
wherein a maximum lighting possible time is set on said flashlight for each current value, and
wherein a current value having maximum lighting possible time which is longer than the maximum exposure time on each said capturing condition is registered in each capturing condition of said memory.

4. A flashlight control method for the portable terminal with camera function which comprises a camera, a flashlight, and a memory comprising:
registering a current value for the flashlight corresponding to each of capturing conditions of the camera into the memory;
searching from said memory the current value which is set to said camera corresponding to the capturing condition; and
letting said flashlight emit light with the searched current value.

5. The flashlight control method according to claim 4 furthermore comprising:
registering a maximum exposure time for each said capturing condition in said memory;
searching from said memory the maximum exposure time corresponding to the capturing condition which is set in said camera;
determining time not exceeding the searched maximum exposure time as a exposure time; and
letting said flashlight emit light during the determined time.

6. The flashlight control method according to claim 5 furthermore comprising:
setting a maximum lighting possible time for said flashlight on each current value; and
registering the current value having maximum lighting possible time which is longer than the maximum exposure time at each said capturing condition for each capturing condition of said memory.

7. A control program which is executed by a computer in a portable terminal which comprises a camera, a flashlight, and a memory in which current values for the flashlight corresponding to each of capturing conditions of the camera are registered, comprising:
a procedure which searches from the memory a current value which is set to the camera corresponding to the capturing condition; and
a procedure which lets said flashlight emit light with the searched current value.
